# EUROPÄISCHE PATENTSCHRIFT

(11) **EP 2 197 796 B1**
(45) Veröffentlichungstag und Bekanntmachung des Hinweises auf die Patenterteilung: **26.01.2011**
(21) Anmeldenummer: 08839099.2
(22) Anmeldetag: 07.10.2008
(51) Int. Cl.: C01G 23/07

(54) **VERFAHREN ZUR HERSTELLUNG VON TITANDIOXID**
METHOD FOR PRODUCING TITANIUM DIOXIDE
PROCÉDÉ DE PRODUCTION DE DIOXYDE DE TITANE

(30) Priorität: 12.10.2007 DE 102007049297
(43) Veröffentlichungstag der Anmeldung: 23.06.2010
(73) Patentinhaber: KRONOS INTERNATIONAL, INC., 51307 Leverkusen (DE)
(72) Erfinder: GRUBER, Rainer, 51379 Leverkusen (DE)
(86) Internationale Anmeldenummer: PCT/EP2008/008431
(87) Internationale Veröffentlichungsnummer: WO 2009/049787

(56) Entgegenhaltungen:
- WO-A-01/60748
- WO-A-2007/050682
- WO-A-2008/036534

## Beschreibung

### Gebiet der Erfindung

Die Erfindung betrifft die Herstellung von Titandioxid durch Oxidation von Titantetrachlorid, wobei flüssiges Titantetrachlorid eingesetzt wird.

### Technologischer Hintergrund der Erfindung

In einem der kommerziell angewendeten Verfahren zur Herstellung von Titandioxid-Pigmentpartikeln, dem sogenannten Chloridverfahren, wird Titantetrachlorid (TiCl₄) mit einem oxidierenden Gas wie Sauerstoff, Luft etc. sowie mit bestimmten Additiven in einem Rohrreaktor zu Titandioxid und Chlorgas umgesetzt:

TiCl₄ + O₂ → TiO₂ + 2 Cl₂

Die TiO₂-Partikel werden anschließend von dem Chlorgas abgetrennt. Als Additve sind AlCl₃ als Rutilisierer sowie Wasserdampf oder Alkalisalze als Keimbildner bekannt.
Aufgrund der hohen Aktivierungsenergie der Oxidation von TiCl₄ müssen die Edukte so stark erhitzt werden, dass eine adiabate Mischtemperatur der Edukte vor einsetzender Reaktion von ca. 800 °C erreicht wird, damit die Reaktion vollständig abläuft. Die Oxidationsreaktion ist stark exotherm, so dass nach vollständigem, adiabaten Umsatz die Temperatur des Produktstroms um etwa 900°C höher als die der Edukte liegt. Bis zur Abtrennung der TiO₂-Partikel von den gasförmigen Reaktionsprodukten mit Hilfe eines Filters muss dieses Gemisch in einer Kühlstrecke erheblich abgekühlt werden, um Schäden am Filter zu vermeiden.

Gemäß der US 3,615,202 werden Sauerstoff und TiCl₄ vorgeheizt und anschließend in einem Rohrreaktor zur Reaktion gebracht. Da die Gesamtmengen der Edukte an jeweils einer Stelle des Rohrreaktors dosiert werden, ist von einem einstufigen Verfahren zu sprechen. Auch EP 0 427 878 B1 offenbart ein einstufiges Verfahren, bei dem Sauerstoff auf etwa 1500 °C bis 1650 °C erhitzt und mit etwa 450 °C heißem TiCl₄-AlCl₃-Dampf vermischt wird. Die Prozessführung ist in beiden Fällen energetisch unbefriedigend, da bezogen auf 100% Energiezuführung zur Aufheizung der Edukte anschließend etwa 160% thermische Reaktionsenergie frei wird. Danach müssen aus dem heißen Produktstrom etwa 210 % Wärmeenergie in der Kühlstrecke abgeführt werden. Damit wird die beträchtliche Reaktionsenthalpie nicht für die Aktivierung der Reaktion genutzt, sondern an das Kühlwassersystem übergeben.

In dem einstufigen Verfahren gemäß GB 969,618 werden TiCl₄ koaxial und das heiße sauerstoffhaltige Gas tangential in den Reaktor eingeleitet. Das TiCl₄ kann in gasförmiger oder in flüssiger Form zugeführt werden.

In der EP 0 583 063 B1 wird zwecks energetischer Optimierung eine zweistufige Einleitung von TiCl₄ in den Reaktor beschrieben. TiCl₄ wird an einem ersten Einlasspunkt mit einer Temperatur von mindestens 450 °C und vermischt mit AlCl₃ und an einem weiteren Einlasspunkt mit einer Temperatur von 350 °C bis 400 °C und ohne AlCl₃ in den heißen Sauerstoffstrom geleitet.

Das Verfahren gemäß EP 0 852 568 B1 sieht vor, neben TiCl₄ auch den Sauerstoff zweistufig zu dosieren. Zielsetzung dieses Verfahrens ist jedoch die wirksame Kontrolle der mittleren TiO₂-Partikelgröße und damit des Farbstichs des TiO₂-Pigmentgrundkörpers. Hier wird in einen etwa 950 °C heißen Sauerstoffstrom zunächst etwa 400 °C heißer TiCl₄-Dampf geleitet. In der nachfolgenden Reaktionszone bilden sich die TiO₂-Partikel und findet das Partikelwachstum statt. An einem zweiten Einlasspunkt wird weniger stark erwärmter TiCl₄-Dampf (ca. 180 °C) zugeführt. Sauerstoff wird an dem zweiten Einlasspunkt mit einer Temperatur zwischen 25 und 1040 °C eingeleitet, wobei die Temperatur der Mischung ausreichend ist, um die Reaktion einzuleiten.

Das mehrstufige Verfahren gemäß US 6,387,347 soll zusätzlich die Agglomeratbildung reduzieren. Hierzu wird der bereits erhitzte TiCl₄-Strom vor der Dosierung in den Reaktor in zwei Teilströme aufgeteilt. Ein Teilstrom wird in der ersten Stufe des Reaktors oxidiert. Der zweite Teilstrom wird durch Einsprühen von flüssigem TiCl₄ abgekühlt (De-Superheating) und anschließend in den Reaktor dosiert. Das De-Superheating findet außerhalb des Reaktors statt, wobei die Kondensationstemperatur des Gesamtstroms nicht unterschritten wird.

Die US 2007/0172414 A1 offenbart ein mehrstufiges Verfahren zur Reaktion von TiCl₄ und O₂, bei dem in der ersten Stufe gasförmiges TiCl₄ und in der zweiten Stufe flüssiges TiCl₄ in den Reaktor eingeleitet wird. Dieses Verfahren ermöglicht Energieeinsparungen und eine Verbesserung des Partikelgrößenspektrums.

### Aufgabenstellung und Kurzfassung der Erfindung

Die Aufgabe der vorliegenden Erfindung bestand darin, ein Verfahren zur Herstellung von Titandioxid durch Oxidation von Titantetrachlorid zu schaffen, das gegenüber den aus dem Stand der Technik bekannten Verfahren weitere Energieeinsparungen ermöglicht.

Die Lösung der Aufgabe besteht in einem Verfahren zur Herstellung von Titandioxid-Partikeln durch Reaktion von Titantetrachlorid mit einem sauerstoffhaltigen Gas in einem Rohrreaktor **dadurch gekennzeichnet, dass** das Titantetrachlorid in wenigstens zwei Stufen und ausschließlich in flüssiger Form in den Reaktor eingeleitet wird.

Weitere vorteilhafte Ausformungen der Erfindung sind in den Unteransprüchen beschrieben.

### Beschreibung der Figuren

Die folgenden Figuren 1 bis 6 dienen dem besseren Verständnis und vorteilhafter Ausformungen der Erfindung:
Figur 1: Schematische Darstellung eines Rohrreaktors mit einer Einstoffdüse, die parallel zu einer Ebene ausgerichtet ist, welche senkrecht zur Mittelachse des Reaktors steht.
Figur 2: Seitenansicht des Reaktors in Figur 1.
Figur 3: Schematische Darstellung eines Rohrreaktors mit einer Hohlkegelbündeldüse.
Figur 4: Vergrößerte Ansicht der Düse in Figur 3.
Figur 5: Schematische Darstellung eines Rohrreaktors mit drei Einstoffdüsen, die radial auf dem Umfang des Rohrreaktors und parallel zu einer Ebene ausgerichtet sind, welche senkrecht zur Mittelachse des Reaktors steht.
Figur 6: Schematische Darstellung eines Rohrreaktors mit drei Einstoffdüsen, die tangential auf dem Umfang des Rohrreaktors und parallel zu einer Ebene ausgerichtet sind, welche senkrecht zur Mittelachse des Reaktors steht.

### Beschreibung der Erfindung

Das erfindungsgemäße Verfahren unterscheidet sich von den genannten einstufigen oder mehrstufigen Chloridverfahren zur Herstellung von Titandioxid aus dem Stand der Technik dadurch, dass das TiCl₄ in wenigstens zwei Stufen und ausschließlich in flüssiger Form in den Oxidationsreaktor eingeleitet wird.

Das insgesamt eingesetzte flüssige TiCl₄ wird dabei mengenmäßig so in mehrere Stufen aufgeteilt, dass in der ersten Stufe nur eine kleine Menge dosiert wird, um die Verbrennung trotz Verwendung der flüssigen Phase zu starten. Die benötigte Aktivierungsenergie wird in der ersten Stufe allein über den vorerhitzten Sauerstoff bereitgestellt. In allen weiteren Stufen wird die Aktivierungsenergie durch den vorerhitzten Sauerstoff und die in den vorgeschalteten Stufen freigesetzte Reaktionsenthalpie der Oxidation von TiCl₄ bereitgestellt.

Bei der Ausgestaltung des Verfahrens kommt es darauf an, die Reaktion nicht durch Einsprühung einer zu großen Menge flüssigen TiCl₄ in eine der Stufen auszulöschen. Einen wirksamen Anhaltspunkt dafür, ob die Reaktion spontan abläuft oder verlöscht, liefert die berechnete adiabate Mischtemperatur aller Edukte in der jeweiligen Stufe vor Beginn der Reaktion. Die Erfahrung zeigt, dass die Reaktion ab einer adiabaten Mischtemperatur von ca. 740°C vollständig abläuft. Auf dieser Grundlage kann der Fachmann ohne Weiteres die Anzahl der erforderlichen Stufen und die Aufteilung des TiCl₄ auf diese Stufen festlegen.

Überraschenderweise kann das erfindungsgemäße Chloridverfahren mit der reinen Flüssigdosierung von TiCl₄ nicht nur bei Einsatz von auf etwa 1600 °C vorerhitzten Sauerstoff durchgeführt werden, sondern auch bei Einsatz von vorerhitztem Sauerstoff einer Temperatur im Bereich von etwa 740 °C bis 1000 °C. In letzterem Fall entfällt die Notwendigkeit der zusätzlichen Sauerstofferhitzung mit einer Hilfsflamme, beispielsweise mit Toluol. Ein weiterer Vorteil der zweiten Variante ist ein geringerer Chlorverbrauch, der ansonsten durch Bildung von HCl im Zuge der Toluolverbrennung entsteht.

Das erfindungsgemäße Verfahren kann unter den Bedingungen der nachfolgenden Beispiele 1 und 2 durchgeführt werden, ohne dass mit dieser Auflistung eine Einschränkung der Erfindung verbunden ist. Das Vergleichsbeispiel beinhaltet die einstufige Dosierung von gasförmigem TiCl₄ gemäß Stand der Technik (EP 0 427 878 B1):

| | | Beispiel 1 | Beispiel 2 | Vergleich |
|---|---|---|---|---|
| Anzahl der Stufen | | 2 | 5 | 1 |
| O₂-Temperatur | | | | |
| vor Reaktionszone (°C) | | 1650 | 920 | 1650 |
| Toluol bedarf (kg/h) | | 110 | 0 | 110 |
| Cl-Verbrauch wg. | | | | |
| HCl-Bildung (kg/h) | | 340 | 0 | 340 |
| TiCl₄ (t/h) zur | 1. Stufe | 9,1 | 1,2 | 24,0 |
| | 2. Stufe | 14,9 | 2,9 | - |
| | 3. Stufe | - | 4,3 | - |
| | 4. Stufe | - | 6,5 | - |
| | 5. Stufe | - | 9,1 | - |

Das erfindungsgemäße Verfahren bietet mehrere Vorteile gegenüber der Dosierung von gasförmigem TiCl₄:
- Der energetische und apparative Aufwand zur Verdampfung des TiCl₄ entfällt.
- Bei der flüssigen Dosierung kann das TiCl₄ aufgrund des hohen Impulses der eingesprühten Flüssigkeitstropfen besser verteilt und es können somit homogenere Reaktionsbedingungen geschaffen werden.
- Bei der mehrstufigen Verfahrensweise wird durch die Vermischung mit relativ kaltem Edukt in der zweiten und den folgenden Verbrennungsstufen die adiabate Reaktionstemperatur abgesenkt, so dass der Sinterprozess, d.h. das Partikelwachstum rascher beendet wird. Hierdurch wird der Anteil grober Partikel im Pigment reduziert.

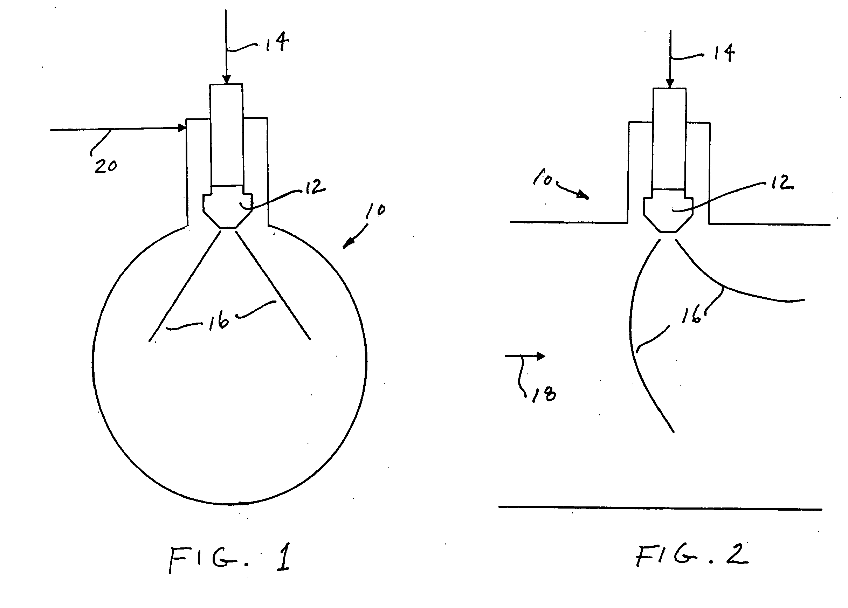

Die Figuren 1 bis 6 zeigen beispielhafte Ausführungen der Erfindung. Figur 1 und Figur 2 zeigen einen Rohrreaktor (10). Die Einleitung des flüssigen TiCl₄ (14) in den Rohrreaktor (10) erfolgt beispielsweise durch Düsen (12), die ringförmig auf dem Umfang des Reaktors (10) angeordnet sind. Das flüssige TiCl₄ (14) wird mit Hilfe der Düse (12) in kleine Tropfen zerstäubt (16), die im Reaktor (10) verdampfen, ohne auf die Wand des Reaktors (10) zu prallen. Figur 2 zeigt die Richtung (18) des Gasstroms im Reaktor (10). Die Düse (12) ist bevorzugt wirksam von Schutzgas (20) umhüllt, das zusätzlich in den Reaktor (10) eingeleitet wird, um eine Anlagerung von Feststoffen und eine thermische Beschädigung der Düse (12) zu verhindern. Figur 1 zeigt die Ausrichtung der Düse (12) parallel zu einer Ebene, welche senkrecht zu der Mittelachse des Reaktors (10) steht.

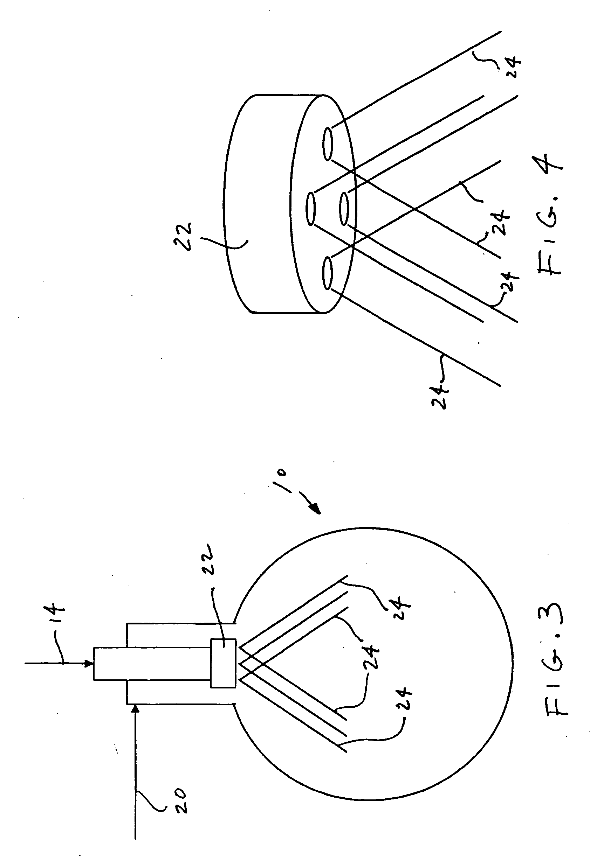

Figur 3 und Figur 4 zeigen eine vorteilhafte Ausführung der Erfindung, bei der eine Hohlkegelbündeldüse (22) verwendet wird, die das eingeleitete flüssige TiCl₄ (14) im Vergleich zu der Einstoffdüse (12) in kleinere Tropfen zerstäubt (24).
In einer anderen Ausformung der Erfindung werden anstelle von Einstoffdüsen wie (12) und (22) Zweistoffdüsen eingesetzt, bei denen gleichzeitig eine Flüssigkeit wie TiCl₄ und ein Treibgas (Treibmedium) in den Reaktor (10) eingeleitet werden können. Als Treibmedium können beispielsweise eines oder ein Gemisch der Gase aus der Gruppe Stickstoff, Argon, Chlorgas und Sauerstoff verwendet werden.

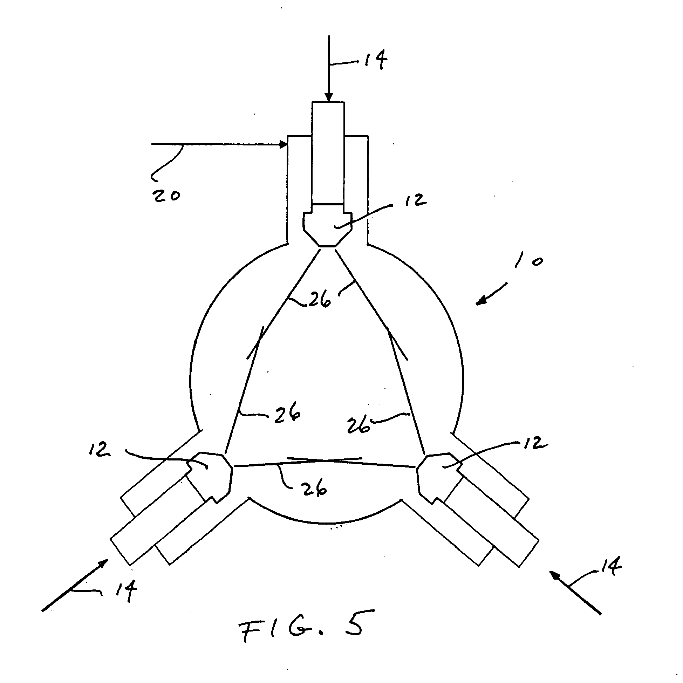

Figur 5 zeigt eine Ausführung der Erfindung, bei der die Düsen (12) radial auf dem Umfang des Rohrreaktors (10) angeordnet und parallel zu einer Ebene ausgerichtet sind, welche senkrecht zur Mittelachse des Reaktors (10) steht. Flüssiges TiCl₄ (14) wird durch die Düsen (12) in den Reaktor (10) eingeleitet und zerstäubt (26).

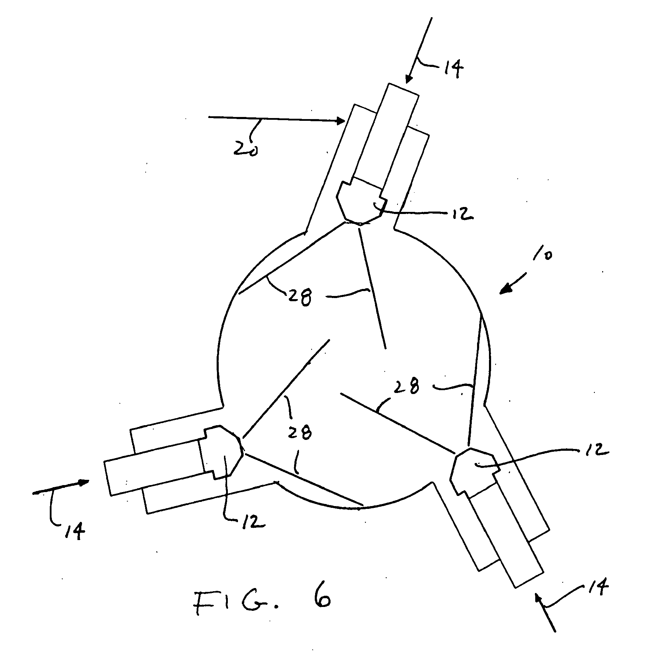

Figur 6 zeigt eine weitere Ausführung der Erfindung, bei der die Düsen (12) tangential auf dem Umfang des Rohrreaktors (10) angeordnet und parallel zu einer Ebene ausgerichtet sind, die senkrecht zur Mittelachse des Reaktors (10) steht. Flüssiges TiCl₄ (14) wird durch die Düsen (12) in den Reaktor (10) eingeleitet und zerstäubt (28). Durch die tangentiale Anordnung der Düsen (12) wird die Strömung im Reaktor (10) in Rotation versetzt. Hierdurch werden die nach dem Stand der Technik in den Reaktor (10) eingebrachten Scheuerteilchen zur Abreinigung der Innenwände besser im Reaktor (10) verteilt.

Die beschriebenen Ausführungsformen stellen nur mögliche Ausformungen der Erfindung dar und sind nicht als Beschränkung der Erfindung zu verstehen. Beispielsweise umfasst das erfindungsgemäße Verfahren optional auch die dem Fachmann bekannte Dosierung von Additiven zur Rutilisierung (z.B. AlCl₃) und zur Keimbildung (z.B. Alkalisalze) in die Reaktionszone. Des Weiteren umfasst das erfindungsgemäße Verfahren auch Ausführungsformen, bei denen der Sauerstoff mehrstufig dosiert wird.

## Patentansprüche

1. Verfahren zur Herstellung von Titandioxid-Partikeln durch Reaktion von Titantetrachlorid mit einem sauerstoffhaltigen Gas in einem Rohrreaktor **dadurch gekennzeichnet,**
**dass** das Titantetrachlorid in wenigstens zwei Stufen und ausschließlich in flüssiger Form in den Reaktor eingeleitet wird.

2. Verfahren nach Anspruch 1 **dadurch gekennzeichnet,**
**dass** das Titantetrachlorid mit Einstoffdüsen insbesondere mit Hohlkegelbündeldüsen eingeleitet wird.

3. Verfahren nach Anspruch 1 **dadurch gekennzeichnet,**
**dass** das Titantetrachlorid mit Zweistoffdüsen eingeleitet wird.

4. Verfahren nach Anspruch 3 **dadurch gekennzeichnet,**
**dass** ein Treibmedium aus der Gruppe der Gase Stickstoff, Argon, Chlorgas oder Mischungen davon eingesetzt wird.

5. Verfahren nach einem Anspruch einem oder mehreren der Ansprüche 2 bis 4
**dadurch gekennzeichnet,**
**dass** die Düsen von einem Schutzgas umhüllt sind.

6. Verfahren nach einem oder mehreren der Ansprüche 2 bis 5 **dadurch gekennzeichnet, dass** die Düsen parallel zu einer Ebene, die senkrecht zur Mittelachse des Reaktors steht, ausgerichtet sind.

7. Verfahren nach Anspruch 6 **dadurch gekennzeichnet,**
**dass** die Düsen tangential auf dem Umfang des Reaktors angeordnet sind.

8. Verfahren nach einem oder mehreren der Ansprüche 1 bis 7 **dadurch gekennzeichnet,**
**dass** der Sauerstoff auf eine Temperatur bis etwa 1600 °C, bevorzugt auf eine Temperatur im Bereich von etwa 740 °C bis 1000 °C vorerhitzt wird.

## Claims

1. Method for manufacturing titanium dioxide particles by reacting titanium tetrachloride with an oxygen-containing gas in a tubular reactor, **characterised in that** the titanium tetrachloride is introduced into the reactor in at least two stages and exclusively in liquid form.

2. Method according to Claim 1, **characterised in that**
the titanium tetrachloride is introduced by means of single-fluid nozzles, especially by means of hollow-cone cluster-head nozzles.

3. Method according to Claim 1, **characterised in that**
the titanium tetrachloride is introduced by means of two-fluid nozzles.

4. Method according to Claim 3, **characterised in that**
a propellant is used, taken from the group of gases comprising nitrogen, argon, chlorine gas or mixtures thereof.

5. Method according to one or more of Claims 2 to 4, **characterised in that** the nozzles are surrounded by a protective gas.

6. Method according to one or more of Claims 2 to 5, **characterised in that** the nozzles are oriented parallel to a plane perpendicular to the centre line of the reactor.

7. Method according to Claim 6, **characterised in that**
the nozzles are arranged tangentially around the circumference of the reactor.

8. Method according to one or more of Claims 1 to 7, **characterised in that** the oxygen is preheated to a temperature of up to roughly 1,600 °C, preferably to a temperature in the range from roughly 740 °C to 1,000 °C.

## Revendications

1. Procédé de production de particules de dioxyde de titane par réaction de tétrachlorure de titane avec un gaz contenant de l'oxygène dans un réacteur tubulaire, **caractérisé en ce que** le tétrachlorure de titane est acheminé en au moins deux étapes et exclusivement sous forme liquide dans le réacteur.

2. Procédé selon la revendication 1, **caractérisé en ce que** le tétrachlorure de titane est acheminé avec des buses à composant unique, en particulier avec des buses en faisceaux coniques creux.

3. Procédé selon la revendication 1, **caractérisé en ce que** le tétrachlorure de titane est acheminé avec des buses à deux composants.

4. Procédé selon la revendication 3, **caractérisé en ce qu'**un milieu propulseur du groupe des gaz azote, argon, chlore gazeux ou leurs mélanges est utilisé.

5. Procédé selon l'une des revendications 2 à 4, **caractérisé en ce que** les buses sont entourées d'un gaz protecteur.

6. Procédé selon l'une ou plusieurs des revendications 2 à 5, **caractérisé en ce que** les buses sont dirigées parallèlement à un plan qui est perpendiculaire à l'axe médian du réacteur.

7. Procédé selon la revendication 6, **caractérisé en ce que** les buses sont disposées sur le plan tangentiel sur le pourtour du réacteur.

8. Procédé selon une ou plusieurs des revendications 1 à 7, **caractérisé en ce que** l'oxygène est préchauffé à une température jusqu'à environ 1600°C, de préférence à une température de l'ordre d'environ 740°C à 1000°C.
